Europäisches Patentamt

**European Patent Office**

Office européen des brevets

(11) Veröffentlichungsnummer: **0 074 462**
**A2**

# (12) EUROPÄISCHE PATENTANMELDUNG

(21) Anmeldenummer: **82104491.4**

(22) Anmeldetag: **22.05.82**

(51) Int. Cl.³: **B 23 Q 35/12**

(30) Priorität: **14.09.81 IT 2395581**

(43) Veröffentlichungstag der Anmeldung:
**23.03.83 Patentblatt 83/12**

(84) Benannte Vertragsstaaten:
**DE FR GB**

(71) Anmelder: **Mecof S.p.A.**
**Via Molino**
**I-15070 Belforte Monferrato(IT)**

(72) Erfinder: **Bonafé, Mario**
**Via Genova 30**
**I-15055 Pontecurone(IT)**

(74) Vertreter: **Mayer, Hans Benno**
**Via dell'Orso 7/A**
**I-20121 Milano(IT)**

(54) **Kopierfraesmaschine mit mindestens zwei beweglichen Staendern.**

(57) Kopierfraesmaschine mit wenigstens zwei beweglich angenordneten Staendern, von denen ein Staender mit einer Tasteinrichtung zum Abtasten des Modells und der andere Staender mit einem geeigneten Fraeswerkzeug zur Durchfuehrung der spanabhebenden Bearbeitung Werkstuckes ausgeruestet sind.

FIG 3

EP 0 074 462 A2

**0074462**

Akte 03-123

Mecof S.p.A., Belforte Monferrato (Italien)

Kopierfraesmaschine mit mindestens zwei beweglichen Staendern

Die vorstehende Erfindung betrifft eine Kopierfraesmaschine mit wenigstens zwei beweglich angeordneten Staendern, von denen ein Staender mit einer Tasteinrichtung zum Abtasten des Modells und der andere Staender mit einem geeigneten Fraeswerkzeug zur Durchfuehrung der spanabhebenden Bearbeitung des Werkstueckes ausgeruestet sind.

Es ist bereits eine Kopierfrasemaschine mit zwei beweglichen Staendern dieser Art bekannt.

In der bekannten Ausfuehrungsform sind die beiden Staender, d.h. der die Abtasteinrichtung aufnehmende Staender, sowie der das Bearbeitungswerkzeug aufnehmende Staender starr miteinander verbunden. Zu diesem Zweck findet eine, zwischen den beweglichen Staendern angeordnete Verbindungsstange, Anwendung.

Die bekannte Kopierfraesmaschine dieser Art, weist ferner eine Antriebseinrichtung auf, die z.B. dem beweglichen Staender, der das Bearbeitungswerkzeug aufnimmt, zugeordnet ist, und die Translationsbewegung dieses beweglichen Staenders, der das Bearbeitungswerkzeug aufnimmt, wird ueber die starre Verbindungsstange an den zweiten Staender, der die Abtasteinrichtung aufnimmt, uebertragen, wodurch die beiden beweglichen Staender synchron bewegt werden. Somit wird der, die Tasteinrichtung aufnehmende Staender entlang der Fuehrungsbahnen des Maschinenbettes verschoben oder gezogen, entsprechend der Translationsbewegung, die durch den, das Bearbeitungswerkzeug aufnehmenden Staender, durchgefuehrt wird. Unter Vorsehung geeigneter Supporte, die an den beweglichen Maschinenstaendern angeordnet sind, kann die Tasteinrichtung oder das Fraeswerkzeug in einer Horizontalebene eine Bewegung (y) ausfuehren, die senkrecht zu den Fuehrungsbahnen (x) ausgerichtet ist, auf denen die Staender verschoben werden. Ferner koennen die Supporte der Tasteinrichtung, sowie des Fraeswerkzeuges eine dritte Bewegung in vertikaler Richtung entlang der Achse (z) ausfuehren.

Unter Ausnutzung der gegebenen Moeglichkeit, ist es somit mit dieser bekannten Maschine moeglich, Tastbewegungen und Bearbeitungsvorgaenge laengs der drei Achsen (x, y, z) durchzufuehren, um somit einmal ein Modell, sowie ein Werkstueck, die auf dem Maschinengestell festgespannt sind, abzutasten, oder spanabhebend zu bearbeiten. Diese bekannte Kopierfraesmaschine mit zwei beweglichen, starr, unter Zuhilfenahme einer Verbindungsstange miteinander verbundenen

**0074462**

Staendern, weist jedoch erhebliche Nachteile auf.

Beruecksichtigt man die aeusserst grosse anzutreibende und zu bewegende Masse, die durch die zwei beweglichen Staender gebildet wird, die sogar starr miteinander durch die Verbindungsstange verbunden sind, so treten nicht unerhebliche Schwierigkeiten fuer die Steuerung der Translationsbewegung der beiden Staender auf, und ferner, gerade weil zwischen den Maschinenstaendern eine starre Verbindung vorgesehen ist, wird jeder, nicht zu vermeidende Fehler in der Ausschwenkbewegung des Tasterstiftes der Abtasteinrichtung, der fuer das Abfahrens des Modells vorgesehen ist, direkt auf die Steuereinrichtung und somit, auf die Antriebseinrichtungen des Maschinenstaenders, der das Bearbeitungswerkzeug aufnimmt, uebertragen. Somit kann die spanabhebende Bearbeitung des Werkstueckes nicht mit der gewuenschten Genauigkeit durchgefuehrt werden, und daher weist das fertig bearbeitete Werkstueck Bearbeitungsungenauigkeiten in der Groesse einiger zehntel Millimeter (0,1 mm) auf. Um diese Nachteile, die aufgrund einer nicht zufriedenstellenden Bearbeitungsgenauigkeit in den bekannten Kopierfraesmaschinen dieser Art auftreten, zu kompensieren, ist es unbedingt erforderlich, die Vorschubgeschwingkeit der verfahrbaren Staender erheblich zu vermindern. Dies bringt natuerlich in einleuchtender Weise, eine erhebliche Verminderung des Maschinenwirkungsgrades mit sich.

Ein weiterer Nachteil, der der bekannten Maschinen anhaftet, ist in der Tatsache zu sehen, dass es in den bekannten Maschinen nicht moeglich ist, mittels eines direkten Kopiervorganges fertige Werkstuecke herzustellen, deren Form spiegelbildlich zur Laengsachse (x) angeordnet ist. Dies ist nur moeglich, nach Aufzeichnung des Kopierweges, z.B. auf einem Magnetband oder auf einer Magnetplatte (Floppy Disk). Ferner, aufgrund der starren Verbindung zwischen den beiden Staendern, werden unerwuenschte Schwingungen und Rattererscheinungen von einem Staender auf den anderen uebertragen, und diese Tatsache wirkt sich aeusserst nachteilig auf die Bearbeitungsqualitaet des fertigen Werkstueckes aus. Weiterhin bringt die starre Verbindung zwischen den beiden beweglichen Maschinenstaendern, Einschraenkungen hinsichtlich der Laenge der Werstuecke, die auf der Maschine bearbeitet werden koennen, mit sich.

Aufgabe der vorstehenden Erfindung ist es, eine verbesserte Kopierfraesmaschine der oben genannten Art vorzuschlagen, mit der die Nachteile des Standes der Technik vermieden werden koennen, und besonders Bearbeitungsfehler aufgrund des Ausschwenkens des Taststiftes beseitigt werden, und auf keinen Fall eine negative Beeinflussung der Bewegung des das Fraeswerkzeug aufnehmenden Staenders auftreten kann, dass ferner die Bearbeitungsgeschwindigkeit und somit der Wirkungsgrad der Maschine erheblich angehoben werden kann, dass jegliche Uebertragung von Schwingungen, vom Staender der die Abtasteinrichtung aufnimmt, auf den Staender der das Bearbeitungswerkzeug traegt, oder umgekehrt, ausgeschlossen ist, wodurch eine weitaus groessere Genauigkeit in der Bearbeitung erzielbar ist, dass die Laenge des Maschinengrundgestelles vergroessert werden kann, und, dass somit der Abstand zwischen dem Taster und dem Werkzeug wesentlich vergroessert ist, um somit laengere Werkstuecke bearbeiten zu koennen, und dass schliesslich, unter Verwendung eines einzigen Modelles die spanabhebende Bearbeitung spiegelbildlich umgekehrter Werkstuecke, d.h. von Werkstuecken mit Linksausfuehrung, sowie von Werkstuecken mit Rechtsausfuehrung, im direkten Kopiervorgang moeglich ist.

Diese Aufgaben werden erfindungsgemaess dadurch geloest, dass die Werkzeugmaschine einen ersten Staender aufweist, der eine Tasteinrichtung traegt und dem ein Antriebsmotor, sowie ein eigener Positionstransduktor, zur Angabe der Staenderposition, zugeordnet ist, dass ferner mindestens ein zweiter Maschinenstaender, zur Aufnahme des Bearbeitungswerkzeuges vorgesehen ist, dem ebenfalls ein eigener Antriebsmotor, sowie ein eigener Positionstransduktor, zur Angabe der Staenderposition zugeordnet ist, und die beiden Maschinenstaender in Richtung der Achse (x) voneinander unabhaengige Translationsbewegungen ausfuehren koennen, dass der Ausgang der Abtasteinrichtung mit einem Datenverarbeitungsgeraet verbunden ist, mit dem auch die Ausgaenge der Positionstransduktoren verbunden sind, die dem Maschinenstaender mit der Tasteinrichtung und dem Maschinenstaender mit dem Bearbeitungswerkzeug zugeordnet sind, und, dass vom Datenverarbeitungsgeraet Ausgaenge abzweigen, ueber die Antriebs- und Steuersignale an die Antriebsmotoren des Staenders mit der Abtasteinrichtung bzw. an den Staender mit dem Bearbeitungswerkzeug zufuehrbar sind.

Weitere Vorteile der vorstehenden Erfindung, koennen der folgenden Beschreibung, den Patentanspruechen, sowie den beigefuegten Zeichnungen entnommen werden.

Mit dem Erfindungsgegenstand wird eine neuartige Kopierfraesmaschine vorgeschlagen, in der Fehler, aufgrund der Ausschwenkbewegung des Tasters der Tasteinrichtung, vollkommen ausgeschlossen werden. Ferner ist eine wesentlich groessere Genauigkeit in der Bearbeitung des Werkstueckes festzustellen und, in ueberraschender Weise, sind auch grosse Endprodukte herzustellen, die Toleranzen innerhalb von 0,01 mm aufweisen und schliesslich, kann eine Erhoehung in der Bearbeitungsgeschwindigkeit sowohl hinsichtlich der Abtastung des Modelles als auch hinsichtlich der Vorschubbewegung des Fraeswerkzeuges von ca. 500 mm/min. auf ca. 1500 - 2000 mm/min erzielt werden, wodurch eine Steigerung des Wirkungsgrades der Maschine von 100% auf 400% gegenueber herkoemmlichen Maschinen dieser Art moeglich ist, und ferner, unter Anwendung des Erfindungsgedan-kens, besteht die Moeglichkeit, mit nur einem einzigen Modell Werkstuecke in Linksausfuehrung, als auch Werkstuecke in Rechtsausfuehrung im direkten Kopiervorgang herzustellen, d.h. Werkstuecke in spiegelbildlicher Ausfuehrung gegenueber einer senkrechten Mittenebene.

Die Erfindung wird nun genauer beschrieben und schematisch, anhand eines Ausfuehrungsbeispieles in den Zeichnungen dargestellt.

Fig. 1 zeigt schematisch in Vorderansicht eine Kopierfraesmaschine mit einem Staender, der die Abtasteinrichtung aufnimmt, sowie mit einem Staender, der die Fraeseinheit traegt;

Fig. 2 zeigt die Kopierfraesmaschinen gemaess Fig. 1 in einem Grundriss, in Richtung des Pfeiles II der Fig. 1.

Fig. 3 zeigt schematisch den Abtastvorgang sowie den Fraesvorgang bei der erfindungsgemaessen Maschine.

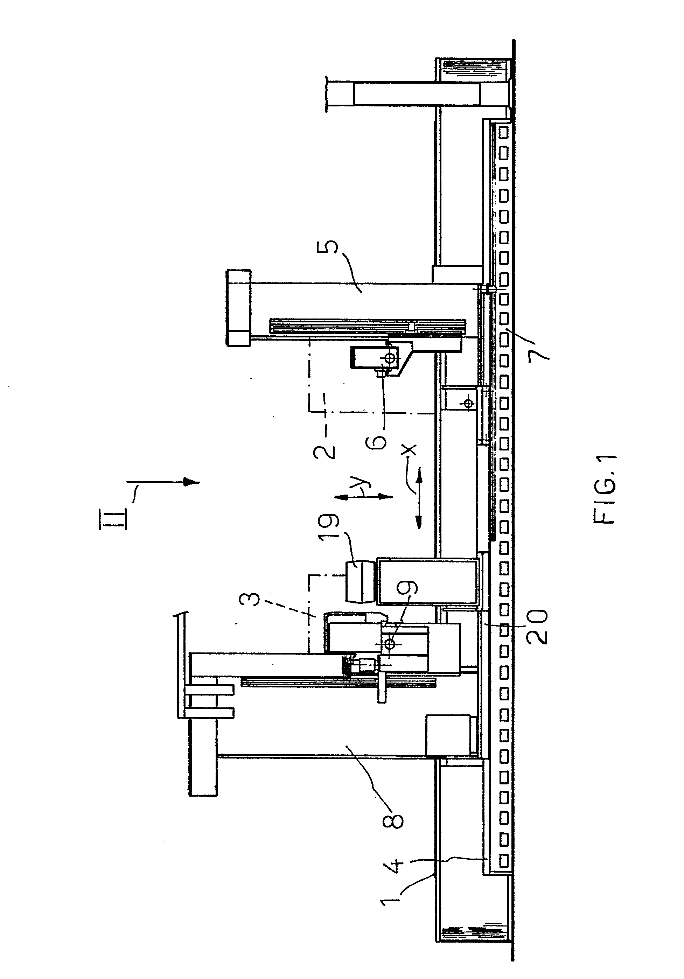

Wie der Fig. 1 zu entnehmen ist, weist die erfindungsgemaesse Werkzeugmaschine ein starres Maschinenbett 1 auf, auf dem sowohl das abzutastende Modell 2, als auch das durch Spanabnahme zu bearbeitende Werkstueck 3 fest aufgespannt sind.

Das Maschinenbett 1 weist ferner parallele Fuehrungsbahnen 4 auf, auf denen laengsbeweglich (in Richtung x) ein erster Staender 5 angeordnet ist, der eine Kopier- oder Abtasteinrichtung 6 aufnimmt, die laengs der Achsen (y) und (z) des Staenders 5 beweglich ist. Wie im Anschluss noch genauer beschrieben wird, sind dem Staender 5 Antriebseinrichtungen 12, sowie eine Transduktoreinheit (17), zur Bestimmung der Position,

- 8 -                                    0074462

in der sich der Staender 5 gerade befindet, zugeordnet. Diese Einrichtungen 12, 17 sind unterhalb des Staenders 5 in einem Gehaeuse 7 angeordnet, das sich unter den parallelen Fuehrungsbahnen 4 des Maschinengestelles befindet. Die Fuehrungsbahnen 4 sind in einer horizontalen Ebene dargestellt, aber selbstverstaendlich, koennten diese Fuehrungsbahnen auch in vertikaler Ebene am Maschinenbett angeordnet sein.

Auf den parallel angeordneten Fuehrungsbahnen 4, ist ferner mindestens ein weiterer Staender 8 angeordnet, der ebenfalls in Richtung der Achse (x) verschiebbar ist, und dieser Maschinenstaender 8 traegt die Fraeseinrichtung 9, die ebenfalls in Richtung der Achsen (y) und (z) bewegbar ist.

Auch der Staender 8, der die Fraeseinheit 9 aufnimmt, ist mit einem Antriebsmotor 15 und einem eigenen Positionstransduktor 18 ausgeruestet, und auch diese Einrichtungen sind im Gehaeuse 7, das unterhalb der parallel angeordneten Fuehrungsbahnen 4 vorgesehen ist, angeordnet.

Sowohl das Maschinenbett 1, das das Modell 2 und das oder die zu bearbeitenden Werkstuecke 3 aufnimmt, als auch die Fuehrungsbahnen 4 und das Maschinengehaeuse 7, sind als ortsfeste Einrichtungen anzusehen; lediglich die Staender 5 und 8 koennen eine Translationsbewegung in Richtung der Achse (x) ausfuehren.

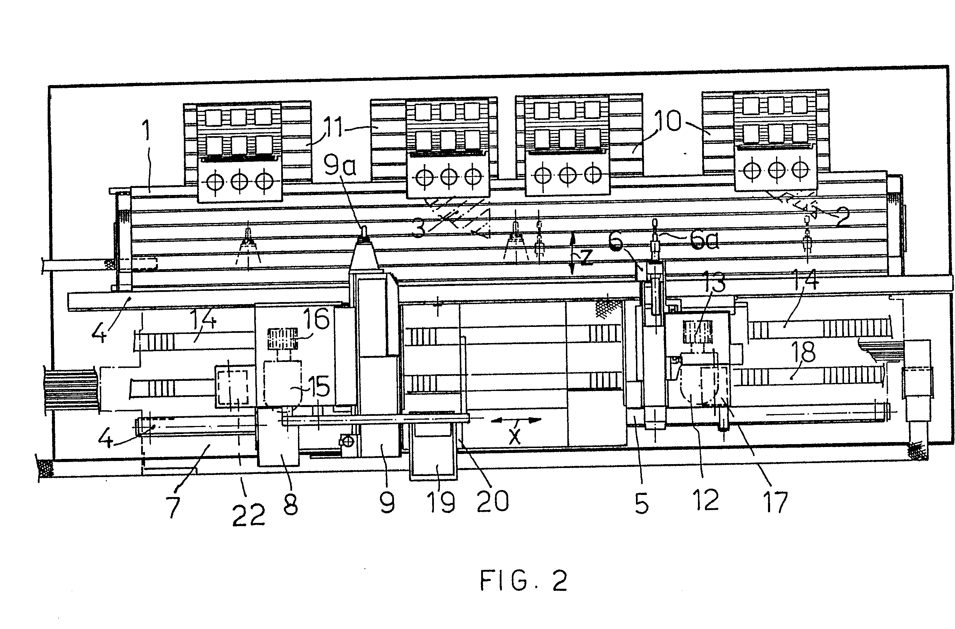

Auch der Fig. 2 kann das feste Maschinenbett 1, sowie die parallelen Fuehrungsbahnen 4, die die Staender 5 und 8 aufnehmen, entnommen werden.

Wie bereits im Vorangegangenen beschrieben, weist der Staender 5 eine Abtasteinrichtung 6 auf, die mit einem Tastfinger 6a ausgeruestet ist, der ein an sich bekanntes Konstruktionsprinzip aufweist, und dazu dient, das unter Zuhilfenahme von robusten Stuetzen 10 auf dem Maschinentisch 1 aufgespannte Modell abzutasten. Der Tastfinger 6a kann eine Schwenkbewegung in Richtung der Achsen (x, y und z) ausfuehren und, in Uebereinstimmung mit seiner jeweiligen Lage, werden durch die Abtasteinrichtungen entsprechende elektrische Signale abgegeben. Der Staender 8, der die Fraeseinheit 9 aufnimmt, kann eine Bewegung in Richtung der Achse (x), aufgrund seiner Translationsbewegung auf den parallelen Fuehrungsbahnen 4, durchfuehren. Ferner nimmt der Staender 8 die Fraeseinheit 9 auf, die ebenfalls eine Bewegung in Richtung der Achse (y), sowie in Richtung der Achse (z) durchfuehren kann. Mit dem Fraeswerkzeug 9a, ist es somit moeglich, das Werkstueck 3 spanabhebend zu bearbeiten. Auch das Werkstueck 3 ist unter Verwendung robuster Stuetzen 11 auf dem ortsfesten Maschinenbett 1 aufgespannt.

Durch Verschieben der Staender 5 und 8, koennen sowohl der Tastfinger 6a, als auch das Fraeswerkzeug 9, laengs des Maschinenbettes 1 bewegt werden, wie dies in vereinfachter Darstellung in Fig. 2 gezeigt ist, wo der Tastfinger 6a, sowie das Fraeswerkzeug 9a in verschiedenen, gestrichelt dargestellten Stellungen angedeutet ist.

Die Bewegung der Tasteinrichtung 6 des Tastfingers 6a, in Richtung der Achsen (y) und (z) erfolgt in herkoemmlicher Art und Weise, unter Verwendung bekannter Antriebseinrichtungen und bekannter Steuereinrichtungen, die im Staender 5 untergebracht sind.

Auch die Bewegung der Fraeseinheit 9 und des Fraeswerkzeuges 9a in Richtung der Achsen (y) und (z) erfolgt in herkoemmlicher Weise mittels bekannter Einrichtungen, die im Staender 8 der Maschine angeordnet sind.

Gegenueber bekannten Werkzeugmaschinen dieser Art, erfolgt gemaess der vorstehenden Erfindung der Antrieb und die Steuerung der Translationsbewegung der Staender 5 und 8 in Richtung der Achse (x) entlang den Fuehrungsbahnen 4 in neuartiger Weise.

Wie bereits eingangs beschrieben, sind die Staender 5 und 8 nicht starr miteinander verbunden, vielmehr werden die Staender 5 und 8 unabhaengig voneinander entlang der parallelen Fuehrungsbahnen 4 des Werkzeugbettes 1, 7 verschoben. Zu diesem Zweck, ist dem Staender 5 ein Antriebsmotor 12, in vorteilhafter Weise ein steuerbarer Gleichstrommotor zugeordnet, der in bekannten Weise unter Verwendung eines Transduktors oder eines aehnlichen Steuermittels, steuerbar ist. Der Motor 12 treibt ueber ein Zahnrad 13, das mit einer Zahnstange 14 in Wirkverbindung steht, die parallel zu den Fuehrungsbahnen 4 und im Inneren des Maschinenbettes 7 angeordnet ist, den Staender an. Auch der Maschinenstaender 8 ist mit einem Motor 15 ausgeruestet, in vorteilhafter Weise, einem steuerbaren Gleichstrommotor, der ebenfalls in seinen Bewegungsablaeufen in bekannter Art und Weise ueber einen Transduktor oder ein aehnliches Steuermittel steuerbar ist.

Auch der Motor 15 treibt ein Zahnrad 16 an, das ebenfalls mit der bereits beschriebenen Zahnstange 14 in Wirkverbindung steht.

Dem Staender 5, der die Tasteinrichtung 6 und den Tastfinger 6a aufnimmt, ist ferner ein Positonstransduktor 17 zugeordnet, der mit einer zweiten Zahnstange 18 in Wirkverbindung steht, die ebenfalls parallel zu den Fuehrungsbahnen 4 und somit auch parallel zur Zahnstange 14 angeordnet ist.

In analoger Weise ist auch der Staender 8, der die Fraeseinheit 9, 9a aufnimmt, mit einem Positionstransduktor 22 versehen, der mit der Zahnstange 18 wirkverbunden ist.

Waehrend ueber den Motor 12 und das Zahnrad 13 sowie den Motor 15 und das entsprechende Zahnrad 16, den Staendern 5 und 8 und somit, der Abtasteinrichtung 6, 6a bzw. der Fraeseinheit 9, 9a, eine gesteuerte Translationsbewegung in Richtung der Achse (x) verliehen werden kann, ist ueber die Positionstransduktoren 17 und 22 eine staendige, genaue Bestimmung der Stellung der Abtasteinrichtung 6, 6a bzw. der Fraeseinheit 9, 9a, gegenueber einem festgelegten Bezugspunkt des Maschinenbettes 1 durchfuehrbar.

Wie ferner den Fig. 1, 2 und 3 zu entnehmen ist, ist der erfindungsgemaessen Werkzeugmaschine eine Datenverarbeitungseinrichtung 19 zugeordnet, die in vorteilhafter Weise auf einer Plattform 20, die am Staender 8 befestigt ist, aufgenommen wird. Sinn und Zweck des Datenverarbeitungsgeraetes 9 wird im Anschluss noch genauer beschrieben werden.

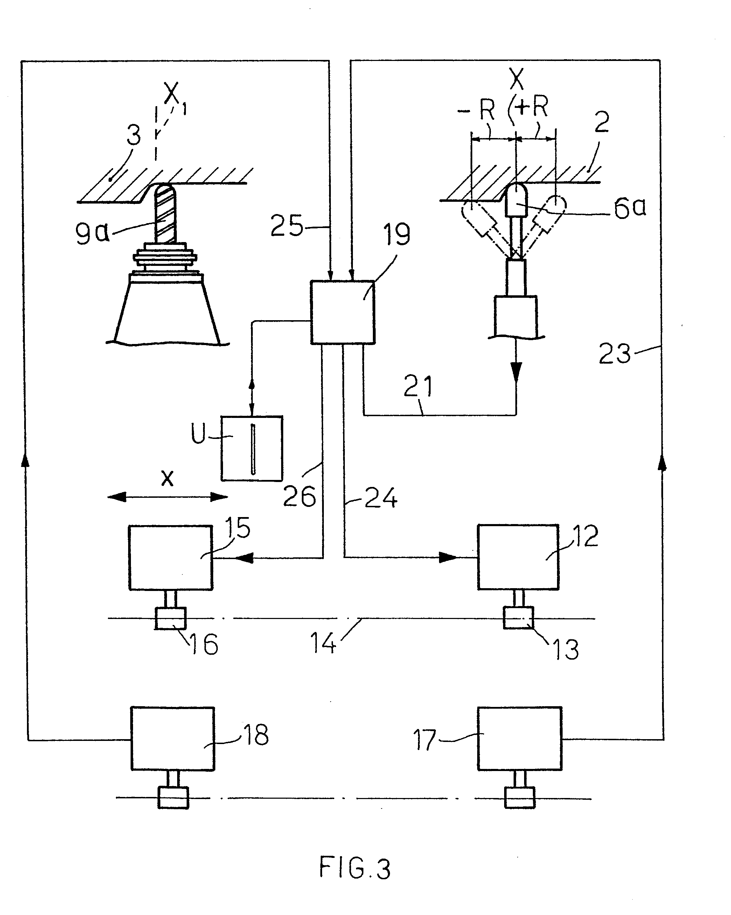

Wie der schematischen Darstellung gemaess Fig. 3 zu entnehmen ist, wird das Modell 2 ueber den Tastfinger 6a abgefahren, und der Tastfinger erfaehrt waehrend der Bewegung in Richtung (x) des Staenders eine Auslenkung, die mit (-R) oder (+R) gekennzeichnet ist. Aus Gruenden der Einfachheit, wird im Anschluss lediglich die Auslenkung des Tastfingers 6a in der Ebene (x) erlaeutert, natuerlich ist das erfindungsgemaesse Prinzip auch auf die Auslenkungen in den Ebenen (y) und (z) anzuwenden.

Der elektrische Wert, der sich aufgrund des Ausschwenkens des Tastfingers 6a einstellt, wird als Ausgangssignal ueber eine elektrische Leitung 21 dem Eingang des Datenverarbeitungsgeraetes 19 zugefuehrt, dieses Datenverarbeitungsgeraet ist Bestandteil des Gesamtsteuersystems der Werkzeugmaschine fuer die numerische Steuerung.

Ferner wird staendig durch den Transduktor 17 die Stellung des Staenders 5 gegenueber der Achse (x) festgestellt, und ein entsprechendes Wertesignal wird ueber die Leitung 23 an das Datenverarbeitungsgeraet 19 weitergeleitet.

Das Datenverarbeitungsgeraet 19, gibt ueber die Ausgangsleitung 24 Steuersignale ab, die den Steuereinrichtungen des Gleichstrommotores 12 zugefuehrt werden, und der ueber sein Zahnrad 13 mit der Zahnstange 14 in Wirkverbindung steht.

Durch den Vergleich der vom Tastfinger 6a abgegebenen Signale, mit den vom Positionstransduktor 17 abgegebenen Signalen, in Verbindung mit dem Abtastprogramm, das fuer den Tastfinger 6a festgelegt und gespeichert wurde, werden dem Antriebsmotor 12 entsprechende Steuerimpulse zugefuehrt, um die Antriebsrichtung fuer die Translastionsbewegung in Richtung der Achse (x), sowie die Antriebsgeschwindigkeit des Motores 12 festzulegen.

Auch der Postitionstransduktor 22, der dem Staender 8 zugeordnet ist, der die Fraeseinheit 9a aufnimmt, gibt entsprechende Signale ab, die mit hoechster Praezision der Stellung des Staenders 8 gegenueber dem Maschinenbett (Achse x) entsprechen, und auch diese Signale werden ueber elektrische Leitungen 25 dem Datenverarbeitungsgeraet 19 zugefuehrt, das stets Bestandteil des numerischen Steuersystemes der Werkzeugmaschine bildet.

Das Datenverarbeitungsgeraet 19 vergleicht all diese Signale mit vorher eingespeicherten Werten, die vom Tastfinger 6a und der Abtasteinrichtung zugefuehrt wurden, und im Anschluss daran werden von der NC Einheit Steuersignale abgegeben, die ueber die elektrische Leitung 26 den Antriebs- und Steuereinrichtungen des Motores 15, der dem Staender 9 zugeordnet ist, zugefuehrt werden, wodurch der Staender 9 in der gewuenschten Weise unter Verwendung des Zahnrades 16, das mit der Zahnstange 14 in Wirkverbindung steht, entlang der Achse (x) verschoben wird.

Wie dem Schema gemaess Fig. 3 zu entnehmen ist, ist der Staender 5, der die Tasteinrichtung 6 und den Taster 6a aufnimmt, in mechnischer Hinsicht vollkommen getrennt vom Staender 8, der die Fraeseinheit 9, 9a traegt. Somit koennen mechanische Belastungen, Schwingungen und extrem starke Auslenkungen des Tastfingers 6a, sowie Abstandsaenderungen aufrund eintretender Waermedehnung und Kraefte, die aufgrund der erheblichen, sich in Bewegung befindenden Massen uebertragen werden, auf keinen Fall die Genauigkeit des Fraesvorganges beeinflussen, da zwischen dem Staender 8, der die Fraeseinheit 9, 9a aufnimmt, und dem Staender 5, der die Tasteinrichtung 6, 6a traegt, keinerlei mechanische Verbindung vorgesehen ist. Die Staender 5 und 8 stehen untereinander lediglich ueber die Steuer- und Programmeinheit mit einer Datenverarbeitungseinrichtung 19 in Wirkverbindung, der die vom Tastfinger 6a, sowie von den Antriebs- und Steuereinrichtungen 12, 17 des Staenders 5 abgegebenen Signale zugefuehrt werden, um diese Signale, unter Durchfuehrung entsprechender Zwischenberechnungen, in entsprechende Verschiebungsimpulse fuer den Staender 8, der die Fraeseinheit 9, 9a aufnimmt, umzuwandeln, und im Anschluss daran, exakte Steuersignale z.B. an die Steuer- und Antriebseinrichtungen 15, 16 weiterzuleiten, die dem Staender 8, der die Fraeseinheit 9, 9a aufweist, zugeordnet sind. Ferner ist es vorgesehen, dass ein staendiger Vergleich der Iststellung der Fraeseinheit 9a, ueber den zugeordneten Posistionstransduktor 22 mit den vorausberechneten Werten bezueglich der Staenderverschiebung, erfolgt.

Mit besonderem Vorteil ist vorgesehen, dass fuer die in die Datenverarbeitungseinrichtung 19 eingegebenen Programme, eine voruebergehende Speicherung der vom Tastfinger 6a abgegebenen Signale in einem Buffer oder aehnlichem Zwischenspeicher der Datenverarbeitungseinrichtung 19 erfolgt, und mit Zeitverzoegerung als Steuersignale ueber die Ausgangsleitung 26 dem Antriebsmotor 15 der Fraeseinheit 9a zugefuehrt werden. Somit fuehrt die Fraeseinheit 9a laengs der Achse (x) eine Translationsbewegung aus, die etwas verzoegert gegenueber der tatsaechlichen Bewegung des Tastfingers 6a erfolgt. Damit wird die Fraeseinheit 9a wesentlich weniger empfindlich z.B. gegenueber ploetzlichen Richtungsaenderungen am Modell, entlang der Achse (x). Somit werden weitere Ungenauigkeiten und Fehler in der spanabhebenden Bearbeitung beseitigt, da diese kurze Verzoegerung der Bewegungsablaeufe der Fraeseinheit 9a gegenueber den Bewegungen der Tasteinrichtung 6a ausreichend ist, um der Datenverarbeitungseinrichtung 22 zu ermoeglichen, die notwendigen Korrekturberechnungen durchzufuehren, um alle zu starken Auslenkungen des Tastfingers auszugleichen und eine entsprechende Anpassung der Steuersignale, die dem Antriebsmotor 15 der Fraeseinheit 9a zuzufuehren sind, vorzunehmen, um somit eine Vorschubbewegung des Fraeswerkzeuges 9a zu erzielen, die mit groesstmoeglicher Genauigkeit, der Form und dem Profil des Modells 2 entspricht.

So ist es in vorteilhafter Weise moeglich, die Vorschubgeschwindigkeit beim Fraesvorgang, waehrend des Abtastens ungefaehr ebener Strecken, ohne nennenswerte Richtungaenderungen wesentlich zu erhoehen, hingegen beim Abtasten von Strecken mit wesentlichen Richtungsaenderungen, die durch den Taster 6a im voraus festgestellt werden, koennen durch die Datenverarbeitungseinrichtung 19 Steuersignale abgegeben werden, um somit kurz vor Erreichen des zu ueberwindenden Hindernisses oder der schroffen Richtungsaenderung, die Vorschubgeschwindigkeit des Staenders 8, der die Fraeseinheit 9 aufnimmt, zu vermindern.

Durch ueber den Positionstransduktor 18 wird stets, Schritt fuer Schritt, die genaue Stellung des Staenders 8 mit der Fraeseinheit 9 ueberwacht wird.

Durch dieses Merkmal, kann die mit der Fraeseinheit 9, 9a erzielbare Bearbeitungsgenauigkeit, in ueberraschender Weise wesentlich gesteigert werden, und aus Toleranzgrenzen um 0,1 mm, kann in Toleranzgrenzen um 0,01 mm uebergegangen werden. Diese Tatsache bringt weitreichende Vorteile mit sich, da ein erheblicher Aufwand in der Endbearbeitung der gefraesten Werkstuecke eingespart werden.

Mit dem Verfahren, sowie der erfindungsgemaessen Vorrichtung, ist es ferner moeglich, mit einem einzigen abzutastenden Modell direkt Werkstuecke anzufertigen, die zueinander spiegelbildlich sind (z.B. Pressformen) zur Herstellung von Autotueren, die bekanntlich als linke Tueren und als rechte Tueren Einsatz finden.

In diesem Falle, ist es ausreichend, die Polaritaet der uebertragenen Steuersignale von einem positiven Signal (+) in ein negatives Signal (-) oder umgekehrt, umzuwandeln.

Ferner ist es durch Einsatz der erfindungsgemaessen Werkzeugmaschine moeglich, die beim Abtasten des Modells durch den Tastfinger 6a hervorgerufenen Abtastsignale auf magnetischen Traegern (z.B. Floppy Disks, Magnetkarten oder Magnetbaendern) aufzuzeichnen, und diese Aufzeichnungen zum Fraesen entsprechender Werkstuecke, auch ohne gleichzeitiges Abtasten eines Modelles, in Kopierfraesmaschinen mit einem einzigen Staender, der die Werkzeugeinheit 9 aufnimmt, durchzufuehren. In Maschinen mit zwei Staendern, die beide mit einer Fraeseinheit 9 ausgeruestet sind, koennen dann gleichzeitig zwei Werkstuecke gefraest werden.

Bei Verwendung von zwei Staendern, die jeweils mit entsprechenden Fraeswerkzeugen ausgeruestet sind, kann fuer die erste Abtastung des Modells einer der Staender v.oruebergehend mit einer Abtasteinrichtung ausgeruestet werden, deren Signale, die waehrend des Abtastvorganges erzeugt werden, auf einem geeigneten Datentraeger aufgezeichnet werden. Im Anschluss, wird die Tasteinrichtung abgebaut oder weggeschwenkt, und beide Maschinenstaender koennen nunmehr gleichzeitig fuer den Fraesvorgang von zwei Werkstuecken verwendet werden, und von den vorher aufgezeichneten Steuersignalen gesteuert werden. Dies fuehrt zu einer weiteren Steigerung der Wirkungsgrades der Maschine.

## Patentansprueche

1. Kopierfraesmaschine, mit wenigstens zwei beweglich angeordneten Staendern, <u>dadurch gekennzeichnet,</u> dass einem ersten Staender (15), der eine Abtasteinrichtung (6a) aufnimmt, ein steuerbarer Antriebsmotor (12) sowie ein Positionstransduktor (17) zugeordnet ist, dass ferner ein zweiter Staende (8) vorgesehen ist, der das Werkzeug (9a), aufnimmt, dem ebenfalls ein steuerbarer Antriebsmotor (15), sowie ein weiterer Positionstransduktor (22) zugeordnet ist, dass die zwei Staender (5, 8) in Richtung der Achse (x) unabhaengig voneinander bewegbar sind, dass der Signalausgang (21) der Abtasteinrichtung (6a) mit dem Eingang eines Datenverarbeitungsgeraetes (19) verbunden ist, mit dem ferner die Ausgaenge (23, 25) der Posistionstransduktoren (17, 22), die dem Staender (5) der Abtastvorrichtung (6a), sowie dem Staender (8) fuer das Fraeswerkzeug (9a) zugeordnet sind, wirkverbunden sind und, dass von dem Datenverarbeitungsgeraet (19) Steuerleitungen (24, 26) abzweigen, ueber die unabhaengige Steuer- und Antriebssignale an die Antriebsmotore (12, 15) weitergeleitet werden, die dem die Abtastvorrichtung (6a) tragenden Staender (5) bzw. dem das Fraeswerkzeug (9a) aufnehmenden Staender (8) zugeordnet sind.

2. Kopierfraesmaschine, nach Patentanspruch 1, <u>dadurch</u>

gekennzeichnet, dass eine Abtastvorrichtung (6, 6a) Verwendung findet, deren Tastfinger (6a) Auslenkungen in Richtung der drei Achsen (x, y und z) durchfuehrt und, dass dieser Tastfinger (6a), entsprechend seiner eingenommenen Auslenkstellung, entsprechende elektrische Signale abgibt.

3. Kopierfraesmaschine, nach Patentanspruch 1, dadurch gekennzeichnet, dass jedem beweglichen Staender (5, 8) ein steuerbarer Antriebsmotor (12, 15) zugeordnet ist, der ueber ein Zahnrad (13, 16) mit einer Zahnstange (14) wirkverbunden ist, die parallel zu den Fuehrungsbahnen (4) des Maschinenbettes (7) angeordnet ist und, dass ferner Posistionstransduktoren (17, 22) vorgesehen sind, die mit einer zweiten Zahnstange (18) wirkverbunden sind, die sich ebenfalls parallel zu den Fuehrungsbahnen (4) des Maschinenbettes erstreckt.

4. Kopierfraesmaschine, nach Patentanspruch 1, dadurch gekennzeichnet, dass die Signale zum Antrieb und zum Steuern des Antriebsmotors (15), der dem Staender (8) mit der Fraeseinheit (9, 9a) zugeordnet ist, vom Datenverarbeitungsgeraet (19) mit Zeitverzoegerung uebertragen werden.

5. Kopierfraesmaschine, nach Patentanspruch 1, dadurch gekennzeichnet, dass zum Kopieren unter Verwendung eines einzigen Modelles (2), zur Herstellung spiegelbildlicher Werkstuecke (3), dem Datenverarbeitungsgeraet (19) eine Umkehreinheit zugeordnet ist, die die uebertragenen Steuersignale in ihrem elektrischen Potential von positiven Zeichen (+) in ein negatives Zeichen (-) umkehrt.

6.  Kopierfraesmaschine, nach Patentanspruch 1, <u>dadurch</u> <u>gekennzeichnet,</u> dass dem Datenverarbeitungsgeraet (19) eine Aufzeichnungseinheit (U), z.B. eine Floppy Disk-Einheit oder eine Magnetband-Einheit, zugeordnet ist.

7.  Kopierfraesmaschine, nach Patentanspruch 1, <u>dadurch</u> <u>gekennzeichnet,</u> dass die Abtasteinrichtung (6, 6a) an einem Staender (5, 8) montierbar ist, der mit einer Fraeseinheit (9, 9a) ausgeruestet ist, und dass diese Abtasteinrichtung (6, 6a) nach dem Abtastvorgang des Modells (2) und der Aufzeichnung der entsprechenden Tastsignale, vom Staender (5, 8) abmontierbar oder abschwenkbar ist, um die Fraeseinheit zum Einsatz zu bringen.

FIG.1

FIG. 2

FIG.3